# EUROPEAN PATENT APPLICATION

(11) **EP 4 253 325 A1**
(43) Date of publication of application: **04.10.2023**
(21) Application number: 23151532.1
(22) Date of filing: 13.01.2023
(51) Int. Cl.: C01G 51/00, H01M 4/00

(54) **POSITIVE ELECTRODE MATERIAL, BATTERY, AND ELECTRONIC DEVICE**

(30) Priority: 25.03.2022 CN 202210300862
(71) Applicant: Zhuhai CosMX Battery Co., Ltd., Zhuhai, Guangdong 519180 (CN)
(72) Inventor: ZENG, Jiajiang, Doumen District Zhuhai, Guangdong (CN); XIA, Dingguo, Doumen District Zhuhai, Guangdong (CN); LI, Suli, Doumen District Zhuhai, Guangdong (CN); LIU, Jianwen, Doumen District Zhuhai, Guangdong (CN)
(74) Representative: Bandpay & Greuter

(57) **Abstract**

The present invention provides a positive electrode material, a battery and an electric device. A first aspect of the present invention provides a positive electrode material, the positive electrode material is Liₙ₋ₓNaₓCo_{1-y}Me_{y}O₂, 0.7≤n≤1, 0<x≤0.15, 0≤y≤0.15, and Me is selected from one or more of Al, Mg, Ti, Zr, Ni, Mn, Y, La, Sr, W, Sc, Ce, P, Nb, V, Ta, and Te; a X-ray diffraction pattern of the positive electrode material includes a peak 002 corresponding to a crystal plane 002, a peak 004 corresponding to a crystal plane 004, a peak 101 corresponding to a crystal plane 101, a peak 102 corresponding to a crystal plane 102, and a peak 103 corresponding to a crystal plane 103; a peak intensity ratio of the peak 101 to the peak 004 is *m,* wherein *m*≥1.5. The positive electrode material provided by the present invention has high discharge gram capacity and stable structure, which is helpful to improve capacity and cycle performance of the battery.

## Description

### TECHNICAL FIELD

The present invention relates to a positive electrode material, a battery and an electronic device, and relates to the field of electrochemical technology.

### BACKGROUND

With the development of mobile phones, tablets and other consumer electronic products towards thinner and lighter, requirements for energy density of batteries are also increasing. At present, a positive electrode material used for high energy density batteries is lithium cobaltate, but with the increase of energy density, it is an effective way to increase the charging cut-off voltage of lithium cobaltate. However, when the charging voltage is ≥ 4.55 V (vs.Li), lithium cobaltate in conventional structure will undergo irreversible phase transition, that is, irreversible phase transition from O3 phase to H1-3 phase, while ion conductivity and electronic conductivity of the H1-3 phase are poor, which leads to capacity attenuation of lithium cobaltate, thus affecting the cycle performance of the batteries.

The way to improve structural stability of lithium cobaltate is to increase content of doped element in lithium cobaltate. However, with the increase of content of doped element, an increase of its gram capacity is not obvious. For example, the gram capacity play of lithium cobaltate at 4.5V is 186 mAh/g(vs.C/0.2C), and the gram capacity play at 4.53V is 189 mAh/g(vs.C/0.2C), with a reduced increase. Therefore, it is an urgent problem for those skilled in the art to solve how to improve the structure of lithium cobaltate, improve the gram capacity and the structural stability of the positive electrode material, and thus improves capacity and cycle performance of the battery.

### SUMMARY

The present invention provides a positive electrode material, to improve gram capacity and structural stability of the positive electrode material, and to improve the capacity and cycle performance of battery.

The present invention also provides a battery and an electronic device, including the above positive electrode material.

A first aspect of the present invention provides a positive electrode material, the positive electrode material is Liₙ₋ₓNaₓCo_{1-y}Me_{y}O₂, 0.7≤n≤1, 0<x≤0.15, 0≤y≤0.15, and Me is selected from one or more of Al, Mg, Ti, Zr, Ni, Mn, Y, La, Sr, W, Sc, Ce, P, Nb, V, Ta, and Te;
a X-ray diffraction pattern of the positive electrode material comprises a peak 002 corresponding to a crystal plane 002, a peak 004 corresponding to a crystal plane 004, a peak 101 corresponding to a crystal plane 101, a peak 102 corresponding to a crystal plane 102, and a peak 103 corresponding to a crystal plane 103; and
a peak intensity ratio of the peak 101 to the peak 004 is *m,* wherein *m*≥1.5.

The present invention provide a positive electrode material, the structural formula of which is Liₙ₋ₓNaₓCo_{1-y}Me_{y}O₂, 0.7≤n≤1, 0<x≤0.15, 0≤y≤0.15, and Me is selected from one or more of Al, Mg, Ti, Zr, Ni, Mn, Y, La, Sr, W, Sc, Ce, P, Nb, V, Ta, and Te. It should be noted that when the positive electrode material is in different delithiation states, the n value is different, and before formation and capacity testing for a positive electrode piece including the positive electrode material, the n value in the positive electrode material (powder state) is 1, and after formation and capacity testing for the positive electrode piece, when the working voltage is 3.6-4.0V, the n value is decreased to 0.70-1. This is mainly because some of lithium ions are used to form protective layers, i.e., CEI film and SEI film, on surfaces of the positive electrode and negative electrode during the first charge and discharge of a battery, which causes irreversible loss of some Li⁺, and thus Li content of the positive electrode material in the positive electrode piece after formation and capacity testing is decreased. Meanwhile, according to the X-ray diffraction pattern of the positive electrode material, it can be seen that it has a peak 002 corresponding to a crystal plane 002, a peak 004 corresponding to a crystal plane 004, a peak 101 corresponding to a crystal plane 101, a peak 102 corresponding to a crystal plane 102, and a peak 103 corresponding to a crystal plane 103, where the peak 002 corresponding to the crystal plane 002, the peak 102 corresponding to the crystal plane 102, and the peak 103 corresponding to the crystal plane 103 show that the positive electrode material provided by the present invention has characteristic peaks different from a conventional lithium cobaltate material and has obvious layered structure characteristics, can display multiple small charging and discharging platforms during charging and discharging processes, and has higher gram capacity and more stable structure under the same charging and discharging cut-off voltage and charging and discharging rate. In addition, when the peak intensity ratio *m* of the peak 101 to the peak 004 is greater, it is helpful to further improve the structural stability of the positive electrode material, so as to be more conducive to the deintercalation and intercalation of lithium ions, otherwise, the structural stability of the positive electrode material will become worse, and there may be incomplete reaction, poor crystallinity and other states leading to poor electrochemical performance. Therefore, the positive electrode material provided by the present invention is helpful to improve the capacity and cycle performance of the batteries, so as to meet the requirements of thin batteries.

In an embodiment, a diffraction angle 2θ corresponding to the peak 002 is equal to 18.6°±0.5°, a diffraction angle 2θ corresponding to the peak 102 is equal to 41.7°±0.5°, a diffraction angle 2θ corresponding to the peak 103 is equal to 47.1°±0.5°.

Particle size of the positive electrode material is 6-18 µm, and the particle size is size of a particle of the positive electrode material and can be measured by Malvern laser particle size analyzer.

By testing, the gram capacity of the positive electrode material at 0.1C is ≥ 196mAh/g(3.0-4.5V, vs.Li), and when charging and discharging at a rate of 0.1C and at a voltage of 3.0-4.5V, the discharge gram capacity obtained is defined as C0 mAh/g, the discharge gram capacity from beginning of a discharge to 4.4V is C1 mAh/g, a gram capacity within a voltage range of 3.8V-3.7V is C2 mAh/g, and C1/C0 ≥ 9%, C2/C0 ≥ 25%.

The present invention also provides a preparation method of the positive electrode material, specifically including: step 1, prepare a compound NaₓCoO₂ containing at least Co and Na elements, where 0.68<x<0.74; step 2, disperse the compound NaₓCoO₂ containing Co and Na and a compound containing lithium into deionized water for ion exchange reaction, to replace some Na ions in NaₓCoO₂ with Li ions to obtain the positive electrode material.

In a specific embodiment, the preparation of the positive electrode material specifically includes the following steps:
step 1-1, weigh a compound containing cobalt and a compound containing sodium according to a required stoichiometric ratio, then fully mix them by one of high-speed mixing device, sand grinding device, ball milling device, plough blade mixing device and inclined mixing device to obtain a mixed material, where during the mixing process, water, alcohol or other solvent media may be added, and then dry the mixed material after mixing evenly.

Where the compound containing cobalt may be one or more of cobalt hydroxide, tricobalt tetraoxide, doped tricobalt tetraoxide, cobalt monoxide, hydroxy cobalt oxide, cobalt nitrate and cobalt sulfate; the compound containing sodium may be one or more of sodium-containing oxide, sodium carbonate, sodium nitrate, sodium hydroxide, sodium bicarbonate and sodium sulfate;
in addition, compounds containing doped element Me can also be added, and the doped element Me includes one or more of Al, Mg, Ti, Zr, Ni, Mn, Y, La, Sr, W, Sc, Ce, P, Nb, V, Ta, and Te, and can specifically be basic magnesium carbonate, magnesium hydroxide, zirconia, aluminum oxide, yttrium oxide, lanthanum oxide and other compounds containing doped element;
further, the compound containing cobalt, the compound containing sodium and the compound containing Me are mixed for at least 4 hours according to Na : Co : Me = x : (1-y) : y, 0.68<x<0.74, 0taining doped elementthen fully mix them tage of 3.0-4.5V, th Those skilled in the art can observe the mixing state of the compounds through SEM electron microscopy.

Step 1-2, load the mixed material prepared in step 1-1 into a crucible, then put it into a muffle furnace, a tunnel furnace, a roller kiln, a tubular furnace or other high-temperature sintering device, and conduct high-temperature sintering in air or oxygen atmosphere to obtain a first compound NaₓCo_{1-y}Me_{y}O₂, 0.68<x<0.74, 0 ≤y ≤0.15.

Furthermore, sintering temperature is 700-900°C and sintering time is 8-50 h.
Step 2, mix the first compound synthesized in step 1-2 with the compound containing lithium in a required ratio and disperse them in deionized water for ion exchange reaction, and through free migration and diffusion of sodium ions and lithium ions in the aqueous solution, replace most of sodium ions in the first compound with Li ions, and after the reaction, wash and dry the resulting reaction product to obtain the positive electrode material;
the compound containing lithium may be one or more of lithium carbonate, lithium chloride, lithium bromide, lithium iodide, lithium nitrate, lithium hydroxide and lithium fluoride, and if necessary, some compounds containing carbon or fast ion conductor compounds can be added to improve conductivity of the positive electrode material.

A mass ratio of the compound containing lithium to the first compound is ≥ 1, further is 1-3; a mass ratio of the solvent to the first compound is ≥ 5. electrode mas 20-150.

Reaction device used includes sealed container device with sealing function and mixing capacity, such as wet coating reaction device, coprecipitation reaction device, and the like; during the reaction, stirring speed is 10-200 rpm, reaction temperature is 70-125°C, and reaction time is ≥ 5 h, further, the reaction time is 10-15 h;
a device for drying is such as air blast oven, vacuum drying oven, rotary kiln, disc dryer, and the like, drying temperature is 80-180°C, and drying time is ≥10 h.

A second aspect of the present invention provides a battery, the battery includes a positive electrode piece, the positive electrode piece includes a positive electrode current collector and a positive electrode active layer provided on at least one surface of the positive electrode current collector, and the positive electrode active layer includes any one of the above positive electrode materials.

The present invention provides a battery, specifically, the battery is obtained by preparing the positive electrode piece from the above positive electrode material, and then assembling the positive electrode piece, a negative electrode piece, a separator and electrolyte. Specifically, the positive electrode piece includes a positive electrode current collector and a positive electrode active layer provided on a surface of the positive electrode current collector, and the positive electrode active layer includes the above positive electrode material, a conductive agent and a binder, where the binder is selected from one or more of polyvinylidene fluoride (PVDF), polytetrafluoroethylene (PTFE) and lithium polyacrylate (PAALi), the conductive agent is selected from one or more of conductive carbon black, acetylene black, Ketjen black, conductive graphite, conductive carbon fiber, carbon nanotube, single-wall carbon nanotube, multi-wall carbon nanotube, and carbon fiber. A mass ratio of the positive electrode material, the conductive agent and the binder in the positive electrode active layer is (70-99) : (0.5-15) : (0.5-15), further, the mass ratio of positive electrode material, conductive agent and binder is (80-98) : (1-10) : (1-10).

During the preparation of the positive electrode piece, the above positive electrode material, conductive agent and binder are mixed in a certain ratio and dispersed in a solvent to obtain a positive electrode active layer slurry, which is coated on a surface of the positive electrode current collector to obtain the positive electrode piece. The positive electrode current collector may be an aluminum foil.

The negative electrode piece includes a negative electrode current collector and a negative electrode active layer provided on a surface of the negative electrode current collector. The negative electrode active layer includes a negative electrode material, a conductive agent and a binder. The negative electrode material is selected from one or more of artificial graphite, natural graphite, hard carbon, mesocarbon microbead, lithium titanate, silicon carbon, and silicon oxide. Types of the conductive agent and the binder are the same as the type of the positive electrode active layer. A mass ratio of the negative electrode material, the conductive agent and the binder is (70-99) : (0.5-15) : (0.5-15), further, the mass ratio of the negative electrode material, the conductive agent and the binder is (80-98) : (1-10) : (1-10).

During the preparation of the negative electrode piece, the above negative electrode material, the conductive agent and the binder are mixed in a certain ratio and dispersed in a solvent to obtain a negative electrode active layer slurry, which is coated on a surface of the negative electrode current collector to obtain the negative electrode piece. The negative electrode current collector may be a copper foil.

The separator is a conventional material in the art, such as polypropylene-based material, or on this basis, a coating separator coated with ceramics on one or both sides.

The electrolyte is a conventional material in the art, including organic solvent, lithium salt and additive. The organic solvent includes ethylene carbonate (EC), diethyl carbonate (DEC), propylene carbonate (PC), and fluoroethylene carbonate (FEC). The additive has a structure shown in the following formula, and its mass is 0.1-10% of a total mass of the electrolyte:

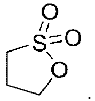

The positive electrode material provided by the present invention is suitable for a high voltage battery, and a working voltage of the battery is 3.0-4.5V.

A third aspect of the present application also provides an electronic device, including the battery provided in the second aspect of the present invention. The battery can be used as a power supply or an energy storage unit of the electronic device. The device may be, but is not limited to, mobile devices (such as mobile phones, tablets, laptops, and the like.), electric vehicles (such as pure electric vehicles, hybrid electric vehicles, plug-in hybrid electric vehicles, electric bicycles, electric scooters, electric golf carts, electric trucks, and the like), and the like.

For mobile devices such as mobile phones, tablets, laptops and the like, they are usually required to be thin and light, and may adopt lithium ion batteries as power supplies.

The implementation of the present invention has at least the following advantages:
1. The positive electrode material provided by the present invention has a special phase structure, which can exhibit a plurality of small charging and discharging platforms during charging and discharging processes, and has higher gram capacity and stable structure at the same charging and discharging cut-off voltage and charging and discharging rate, which is helpful to improve capacity and cycle performance of the batteries, so as to meet the requirements of battery thinning.
2. The battery provided by the present invention has good capacity and cycle performance.

### BRIEF DESCRIPTION OF DRAWINGS

FIG. 1 is a XRD test data diagram of a positive electrode material provided in Example 1 of the present invention; and
FIG. 2 shows charge and discharge curves of the positive electrode material provided in Example 1 of the present invention at 3.0-4.5V (vs.Li) and a rate of 0.1C.

### DESCRIPTION OF EMBODIMENTS

In order to make the objectives, technical solutions and advantages of the present invention more clear, the following will describe the technical solutions in the examples of the present invention clearly and completely in combination with the examples of the present invention. Obviously, the described examples are part of the examples of the present invention, not all of them. Based on the examples of the present invention, all other examples obtained by those skilled in the art without creative work belong to the scope of the present invention.

Unless otherwise specified, experimental methods used in the following examples are conventional methods; reagents, materials, and the like used in the following examples can be obtained from commercial sources unless otherwise specified.

### Example 1

A preparation method of a positive electrode material provided in this example includes the following steps:
(1) weigh 3.656 kg of sodium carbonate powder and 29.105 kg of cobalt nitrate hexahydrate powder, put them into a high-speed mixing device, mix them at 300 rpm for 3 minutes, mix them at 500 rpm for 5 minutes, mix them at 1000 rpm for 10 minutes, and then take out the mixture, and after confirming that there is no small white spot of white sodium carbonate in the mixture, it is considered that the mixture is uniform;
(2) take 30 g of the mixture and put it into a ceramic crucible, conduct high-temperature sintering using a well muffle furnace with device model of VBF-1200X with a temperature rise rate for sintering temperature rise curve being 5°C/min, conduct constant temperature sintering for 10 hours when the temperature rises to 750°C, and after sintering, naturally cool down to room temperature and take out the sample to obtain the sintered Na_{0.69}CoO₂, a compound containing cobalt and sodium;
(3) add 200 ml of deionized water, 10.49 g of lithium hydroxide monohydrate and 10.59 g of lithium chloride into a reaction vessel, stir for 5 minutes at a water temperature of 78°C and a rotating speed of 20 rpm, then weigh 10 g of Na_{0.69}CoO₂, the compound containing cobalt element and sodium element obtained in step 2, and keep them for continuous reaction at 78°C and a rotating speed of 20 rpm for 8 hours; and
(4) after the reaction, take out reaction product, conduct suction filtration washing with deionized water for three times, then dry it in an air drying oven at 90°C for 8 hours to obtain the positive electrode material.

### Example 2

A preparation method of a positive electrode material provided in this example may refer to Example 1, the difference lies in that:
(3) add 200 ml of deionized water, 10.49 g of lithium hydroxide monohydrate and 21.71 g of lithium bromide into a reaction vessel, stir for 5 minutes at a water temperature of 78°C and at a rotating speed of 20 rpm, weigh 10 g of Na_{0.69}CoO₂, the compound containing cobalt element and sodium element obtained in step 2, and keep them for continuous reaction at 78°C and a rotating speed of 20 rpm for 8 hours.

### Example 3

A preparation method of a positive electrode material provided in this example may refer to Example 1, the difference lies in that:
(3) add 200 ml of deionized water, 10.49 g of lithium hydroxide monohydrate and 33.46 g of lithium iodide into a reaction vessel, stir for 5 minutes at a water temperature of 78°C and at a rotating speed of 20 rpm, weigh 10 g of Na_{0.69}CoO₂, the compound containing cobalt element and sodium element obtained in step 2, and keep them for continuous reaction at 78°C and at a speed of 20 rpm for 8 hours.

### Example 4

A preparation method of a positive electrode material provided in this example may refer to Example 1, the difference lies in that:
(3) add 200 ml of deionized water, 10.49 g of lithium hydroxide monohydrate and 6.48 g of lithium fluoride into a reaction vessel, stir for 5 minutes at a water temperature of 78°C and at a rotating speed of 20 rpm, weigh 10 g of Na_{0.69}CoO₂, the compound containing cobalt element and sodium element obtained in step 2, and keep them for continuous reaction at 78°C at a speed of 20 rpm for 8 hours.

### Example 5

A preparation method of a positive electrode material provided in this example may refer to Example 1, the difference lies in that:
(3) add 200 ml of deionized water, 16.78 g of lithium hydroxide monohydrate and 3.69 g of lithium carbonate into a reaction vessel, stir for 5 minutes at a water temperature of 78°C and at a rotating speed of 20 rpm, weigh 10 g of Na_{0.69}CoO₂, the compound containing cobalt element and sodium element obtained in step 2, and keep them for continuous reaction at 78°C at a speed of 20 rpm for 8 hours.

### Example 6

A preparation method of a positive electrode material provided in this example may refer to Example 1, the difference lies in that:
(3) add 200 ml of deionized water, 16.78 g of lithium hydroxide monohydrate and 16.96 g of lithium chloride into a reaction vessel, stir for 5 minutes at a water temperature of 78°C and at a rotating speed of 20 rpm, weigh 10 g of Na_{0.69}CoO₂, the compound containing cobalt element and sodium element obtained in step 2, and keep them for continuous reaction at 78°C at a speed of 20 rpm for 8 hours.

### Example 7

A preparation method of a positive electrode material provided in this example may refer to Example 1, the difference lies in that:
(3) add 200 ml of deionized water, 16.78 g of lithium hydroxide monohydrate and 4.24 g of lithium chloride into a reaction vessel, stir for 5 minutes at a water temperature of 78°C and at a rotating speed of 20 rpm, weigh 10 g of Na_{0.69}CoO₂, the compound containing cobalt element and sodium element obtained in step 2, and keep them for continuous reaction at 78°C at a speed of 20 rpm for 8 hours.

### Example 8

A preparation method of a positive electrode material provided in this example may refer to Example 1, the difference lies in that:
(3) add 200 ml of deionized water, 10.49 g of lithium hydroxide monohydrate and 10.59 g of lithium chloride into a reaction vessel, stir for 5 minutes at a water temperature of 78°C and at a rotating speed of 30 rpm, weigh 10 g of Na_{0.69}CoO₂, the compound containing cobalt element and sodium element obtained in step 2, and keep them for continuous reaction at 78°C at a speed of 30 rpm for 8 hours.

### Example 9

A preparation method of a positive electrode material provided in this example may refer to Example 1, the difference lies in that:
(1) weigh 2.138 kg of sodium oxide powder and 29.105 kg of cobalt nitrate hexahydrate powder, put them into a high-speed mixing device, mix them at 300 rpm for 3 minutes, mix them at 500 rpm for 5 minutes, mix them at 1000 rpm for 10 minutes, and then take out the mixture, and after confirming that there is no small white spot of white sodium oxide in the mixture, it is considered that the mixture is uniform.

### Example 10

A preparation method of a positive electrode material provided in this example may refer to Example 1, the difference lies in that:
(1) weigh 3.656 kg of sodium carbonate powder and 7.493 kg of cobalt monoxide powder, put them into a high-speed mixing device, mix them at 300 rpm for 3 minutes, mix them at 500 rpm for 5 minutes, mix them at 1000 rpm for 10 minutes, and then take out the mixture, and after confirming that there is no small white spot of white sodium oxide in the mixture, it is considered that the mixture is uniform.

### Example 11

A preparation method of a positive electrode material provided in this example may refer to Example 1, the difference lies in that:
(1) weigh 3.656 kg of sodium carbonate powder and 9.293 kg of cobalt hydroxide powder, put them into a high-speed mixing device, mix them at 300 rpm for 3 minutes, mix them at 500 rpm for 5 minutes, mix them at 1000 rpm for 10 minutes, and then take out the mixture, and after confirming that there is no small white spot of white sodium carbonate in the mixture, it is considered that the mixture is uniform.

### Example 12

A preparation method of a positive electrode material provided in this example may refer to Example 1, the difference lies in that:
(1) weigh 3.656 kg of sodium carbonate powder and 8.026 kg of tricobalt tetraoxide powder, put them into a high-speed mixing device, mix them at 300 rpm for 3 minutes, mix them at 500 rpm for 5 minutes, mix them at 1000 rpm for 10 minutes, and then take out the mixture, and after confirming that there is no small white spot of white sodium carbonate in the mixture, it is considered that the mixture is uniform.

### Example 13

A preparation method of a positive electrode material provided in this example may refer to Example 1, the difference lies in that:
(1) weigh 3.656 kg of sodium carbonate powder, 9.200 kg of cobalt hydroxide powder and 50.98 g of nano aluminium oxide powder, put them into a high-speed mixing device, mix them at 300 rpm for 3 minutes, mix them at 500 rpm for 5 minutes, mix them at 1000 rpm for 10 minutes, and then take out the mixture, and after confirming that there is no small white spot of white sodium carbonate in the mixture, it is considered that the mixture is uniform.

### Example 14

A preparation method of a positive electrode material provided in this example may refer to Example 1, the difference lies in that:
(1) weigh 3.656 kg of sodium carbonate powder, 9.014 kg of cobalt hydroxide powder and 152.94 g of nano aluminium oxide powder, put them into a high-speed mixing device, mix them at 300 rpm for 3 minutes, mix them at 500 rpm for 5 minutes, mix them at 1000 rpm for 10 minutes, and then take out the mixture, and after confirming that there is no small white spot of white sodium carbonate in the mixture, it is considered that the mixture is uniform.

### Example 15

A preparation method of a positive electrode material provided in this example may refer to Example 1, the difference lies in that:
(1) weigh 3.656 kg of sodium carbonate powder, 8.828 kg of cobalt hydroxide powder and 254.9 g of nano aluminium oxide powder, put them into a high-speed mixing device, mix them at 300 rpm for 3 minutes, mix them at 500 rpm for 5 minutes, mix them at 1000 rpm for 10 minutes, and then take out the mixture, and after confirming that there is no small white spot of white sodium carbonate in the mixture, it is considered that the mixture is uniform.

### Example 16

A preparation method of a positive electrode material provided in this example may refer to Example 1, the difference lies in that:
(1) weigh 3.656 kg of sodium carbonate powder, 9.200 kg of cobalt hydroxide powder and 40.30 g of nano magnesium oxide powder, put them into a high-speed mixing device, mix them at 300 rpm for 3 minutes, mix them at 500 rpm for 5 minutes, mix them at 1000 rpm for 10 minutes, and then take out the mixture, and after confirming that there is no small white spot of white sodium carbonate in the mixture, it is considered that the mixture is uniform.

### Example 17

A preparation method of a positive electrode material provided in this example may refer to Example 1, the difference lies in that:
(1) weigh 3.656 kg of sodium carbonate powder, 9.014 kg of cobalt hydroxide powder and 120.91 g of nano magnesium oxide powder, put them into a high-speed mixing device, mix them at 300 rpm for 3 minutes, mix them at 500 rpm for 5 minutes, mix them at 1000 rpm for 10 minutes, and then take out the mixture, and after confirming that there is no small white spot of white sodium carbonate in the mixture, it is considered that the mixture is uniform.

### Example 18

A preparation method of a positive electrode material provided in this example may refer to Example 1, the difference lies in that:
(1) weigh 3.656 kg of sodium carbonate powder, 8.828 kg of cobalt hydroxide powder and 201.52 g of nano magnesium oxide powder, put them into a high-speed mixing device, mix them at 300 rpm for 3 minutes, mix them at 500 rpm for 5 minutes, mix them at 1000 rpm for 10 minutes, and then take out the mixture, and after confirming that there is no small white spot of white sodium carbonate in the mixture, it is considered that the mixture is uniform.

### Example 19

A preparation method of a positive electrode material provided in this example may refer to Example 1, the difference lies in that:
(1) weigh 2.138 kg of sodium oxide powder and 9.293 kg of cobalt hydroxide powder, put them into a high-speed mixing device, mix them at 300 rpm for 3 minutes, mix them at 500 rpm for 5 minutes, mix them at 1000 rpm for 10 minutes, and then take out the mixture, and after confirming that there is no small white spot of white sodium oxide in the mixture, it is considered that the mixture is uniform.

### Example 20

A preparation method of a positive electrode material provided in this example may refer to Example 1, the difference lies in that:
(1) weigh 2.138 kg of sodium oxide powder, 9.200 kg of cobalt hydroxide powder and 50.98 g of nano aluminium oxide powder, put them into a high-speed mixing device, mix them at 300 rpm for 3 minutes, mix them at 500 rpm for 5 minutes, mix them at 1000 rpm for 10 minutes, and then take out the mixture, and after confirming that there is no small white spot of white sodium oxide in the mixture, it is considered that the mixture is uniform.

### Example 21

A preparation method of a positive electrode material provided in this example may refer to Example 1, the difference lies in that:
(1) weigh 2.138 kg of sodium oxide powder, 9.014 kg of cobalt hydroxide powder and 152.94 g of nano aluminium oxide powder, put them into a high-speed mixing device, mix them at 300 rpm for 3 minutes, mix them at 500 rpm for 5 minutes, mix them at 1000 rpm for 10 minutes, and then take out the mixture, and after confirming that there is no small white spot of white sodium carbonate in the mixture, it is considered that the mixture is uniform.

### Example 22

A preparation method of a positive electrode material provided in this example may refer to Example 1, the difference lies in that:
(1) weigh 2.138 kg of sodium oxide powder, 8.828 kg of cobalt hydroxide powder and 254.9 g of nano aluminium oxide powder, put them into a high-speed mixing device, mix them at 300 rpm for 3 minutes, mix them at 500 rpm for 5 minutes, mix them at 1000 rpm for 10 minutes, and then take out the mixture, and after confirming that there is no small white spot of white sodium oxide in the mixture, it is considered that the mixture is uniform.

### Comparative Example 1

A positive electrode material provided by this comparative example is conventional undoped lithium cobaltate with chemical composition of Li_{1.003}CoO₂, and a preparation method thereof includes the following steps:
(1) weigh lithium carbonate and conventional undoped spherical particles of Co₃O₄ purchased in the market in a molar ratio of Li : Co= 100.3 : 100, mix the two substances at 300 rpm for 3 minutes, at 500 rpm for 5 minutes, and at 1000 rpm for 10 minutes using the same mixing device as the examples, and then take out the mixture, and after confirming that there is no small white spot of white lithium carbonate in the mixture, it is considered that the mixture is uniform;
(2) take 30 g of the mixture and put it into a ceramic crucible, conduct high-temperature sintering using a well muffle furnace with device model of VBF-1200X with a temperature rise rate for sintering temperature rise curve of 5°C/min, conduct constant temperature sintering for 10 hours when the temperature rises to 1050°C, and after sintering, naturally cool down to room temperature and take out the sample, to obtain the sintered Li_{1.003}CoO₂, a compound containing cobalt and lithium; and
(3) crush and grind the sintered lithium cobaltate, and then put the powder in the muffle furnace again for sintering at 950°C for 8 hours; crush the sintered product to obtain Li_{1.003}CoO₂ with D50 being 15.2 µm without any doping and coating.

### Comparative Example 2

A positive electrode material provided by this comparative example is doped and coated lithium cobaltate for high voltage, with chemical composition being Li_{1.0028}Co_{0.982}Al_{0.014}Mg_{0.002}La_{0.002}O₂;
a preparation method of the positive electrode material includes the following steps:
(1) weigh lithium carbonate, conventional spherical Co₃O₄ particles doped with Al and La and purchased in the market, and magnesium oxide particles in a molar ratio of Li : Co : Mg = 100.28 : 98.2 : 0.2, with stoichiometric ratio of the Co₃O₄ particles is Co: Al: La = 98.2: 1.4: 0.2, mix the two substances at 300 rpm for 3 minutes, at 500 rpm for 5 minutes, and at 1000 rpm for 10 minutes using the same mixing device as the examples, and then take out the mixture, and after confirming that there is no small white spot of white lithium carbonate in the mixture, it is considered that the mixture is uniform;
(2) take 30 g of the mixture and put it into a ceramic crucible, conduct high-temperature sintering using a well muffle furnace with device model of VBF-1200X with a temperature rise rate for sintering temperature rise curve of 5°C/min, conduct constant temperature sintering for 10 hours when the temperature rises to 1030°C, and after sintering naturally cool down to room temperature and take out the sample, to obtain the sintered Li_{1.0028}Co_{0.982}Al_{0.014}Mg_{0.002}La_{0.002}O₂, a compound containing cobalt and lithium; and
(3) crush and grind the sintered lithium cobaltate, weigh it and titanium dioxide in a molar ratio of Co : Ti = 98.2 : 0.2, then put the two substances into a high-speed mixing device, set a mixing procedure, mix them at 300 rpm for 3 minutes, mix them at 500 rpm for 5 minutes, mix them at 1000 rpm for 10 minutes, and then take out the mixture; put the powder in the muffle furnace again for sintering at 950°C for 8 hours, and then crush the sintered product to obtain Li_{1.0028}Co_{0.982}Al_{0.014}Mg_{0.002}La_{0.002}Ti_{0.002}O₂, a doped and coated lithium cobaltate material for high voltage, with D50 of 14.8 µm.

### Comparative Example 3

A preparation method of a positive electrode material provided in this comparative example may refer to Example 1, the difference lies in that:
(3) weigh 10.49 g of lithium hydroxide monohydrate, 10.59 g of lithium chloride and 10 g of Na_{0.69}CoO₂, the compound containing cobalt and sodium obtained in step 2, add them into a mixer, mix them evenly and sinter them at high temperature of 300°C for 5 hours.

### Comparative Example 4

A preparation method of a positive electrode material provided in this comparative example may refer to Example 1, the difference lies in that:
(3) weigh 10.49 g of lithium hydroxide monohydrate, 10.59 g of lithium chloride and 10 g of Na_{0.69}CoO₂, the compound containing cobalt and sodium obtained in step 2, add them into a mixer, mix them evenly and sinter them at high temperature of 250°C for 5 hours.

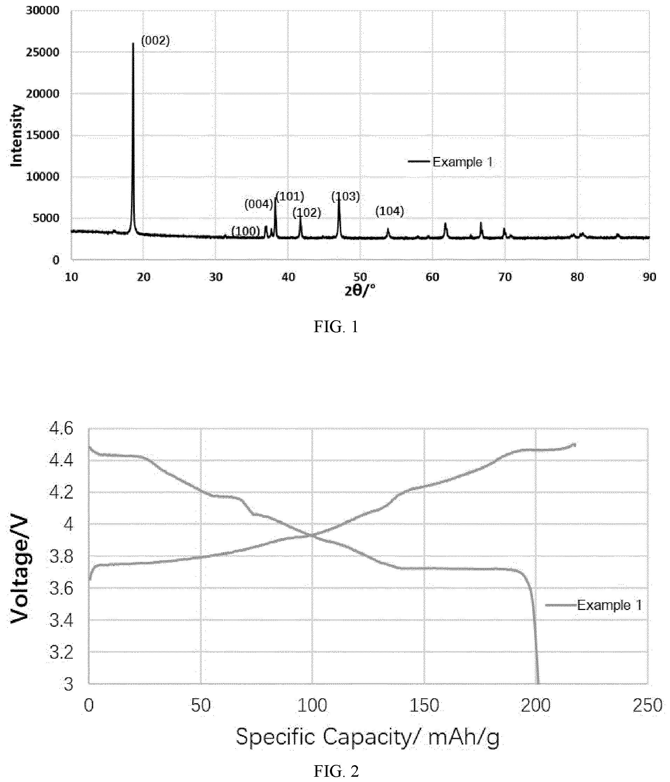

XRD tests are carried out on the positive electrode materials provided by Examples 1-22 and Comparative examples 1-4. FIG. 1 is a XRD test data diagram of the positive electrode material provided by Example 1 of the present invention. According to FIG. 1, the XRD diagram for the positive electrode material provided by Example 1 includes a peak 002 corresponding to a crystal plane 002, a peak 102 corresponding to a crystal plane 102, a peak 103 corresponding to a crystal plane 103, a peak 101 corresponding to a crystal plane 101 and a peak 004 corresponding to a crystal plane 004, and corresponding diffraction angles and peak intensities are listed, as shown in Table 1:

**Table 1 Test results of the positive electrode materials provided by Examples 1-22 and Comparative Examples 1-4**

| | 20 value of crystal plane 002 (°) | 20 value of crystal plane 102 (°) | 2θ value of crystal plane 103 (°) | Peak intensity of crystal plane 004 | Peak intensity of crystal plane 101 | Peak intensity ratio of crystal plane 101 / crystal plane 004 (m) |
|---|---|---|---|---|---|---|
| Example 1 | 18.5937 | 41.7818 | 47.139 | 1799.23 | 3236.43 | 1.799 |
| Example 2 | 18.62 | 41.7687 | 47.0864 | 1542.01 | 3111.83 | 2.018 |
| Example 3 | 18.6069 | 41.703 | 47.0733 | 1393.6 | 4775.51 | 3.427 |
| Example 4 | 18.5675 | 41.6768 | 47.0208 | 1305.81 | 5078.15 | 3.889 |
| Example 5 | 18.5675 | 41.6768 | 47.0208 | 1241.2 | 5071.88 | 4.086 |
| Example 6 | 18.5806 | 41.6899 | 47.047 | 1259.84 | 3540.2 | 2.81 |
| Example 7 | 18.5675 | 41.703 | 47.0339 | 856.25 | 3942.59 | 4.604 |
| Example 8 | 18.5675 | 41.6899 | 47.047 | 1652.05 | 3029.03 | 1.833 |
| Example 9 | 18.5675 | 41.6899 | 47.047 | 1499.32 | 4205.86 | 2.805 |
| Example 10 | 18.5543 | 41.6768 | 47.0208 | 1556.6 | 2638.51 | 1.695 |
| Example 11 | 18.5543 | 41.6636 | 47.0208 | 1602.74 | 4142.8 | 2.585 |
| Example 12 | 18.5806 | 41.6899 | 47.0339 | 1257.34 | 2717.86 | 2.162 |
| Example 13 | 18.5806 | 41.703 | 47.047 | 1284.85 | 3809.11 | 2.965 |
| Example 14 | 18.5806 | 41.6899 | 47.0339 | 1603.14 | 5367.07 | 3.348 |
| Example 15 | 18.5675 | 41.703 | 47.0339 | 1047.47 | 4753.9 | 4.538 |
| Example 16 | 18.5806 | 41.703 | 47.047 | 1043.66 | 2195.1 | 2.103 |
| Example 17 | 18.5675 | 41.703 | 47.0208 | 1029.42 | 4484.2 | 4.356 |
| Example 18 | 18.5675 | 41.6899 | 47.0208 | 546.35 | 2922.41 | 5.349 |
| Example 19 | 18.5675 | 41.6899 | 47.047 | 1438.28 | 3646.54 | 2.535 |
| Example 20 | 18.5675 | 41.6768 | 47.0339 | 1174.97 | 4204.03 | 3.578 |
| Example 21 | 18.5543 | 41.6899 | 47.0339 | 681.77 | 3926.77 | 5.76 |
| Example 22 | 18.5543 | 41.6899 | 47.0208 | 469.15 | 3219.22 | 6.862 |
| Comparative Example 1 | No characteristic peak | No characteristic peak | No characteristic peak | / | / | / |
| Comparative Example 2 | No characteristic peak | No characteristic peak | No characteristic peak | / | / | / |
| Comparative Example 3 | 18.5825 | 41.6885 | 47.0338 | 428.32 | 624.92 | 1.459 |
| Comparative Example 4 | 18.5782 | 41.6977 | 47.0309 | 478.20 | 651.78 | 1.363 |

According to the XRD data provided by Examples 1-12 in Table 1, different raw materials and their ratios have a certain impact on phase peak position and the peak intensity of the positive electrode material; it can be seen according to the XRD data provided by Examples 13-22 that with an increase of doping element content, the peak intensity ratio of crystal plane 101 to crystal plane 004 in the positive electrode materials increases significantly; it can be seen according to the Comparative Examples 3-4 that the peak intensity ratio *m* of the crystal plane 101 and the crystal plane 004 in the positive electrode materials prepared according to the solution method provided by the present invention is significantly increased compared with an ion exchange reaction by the means of sintering.

Button cell capacity tests are carried out for the positive electrode materials prepared from Examples 1-22 and Comparative Examples 1-4. A preparation method of a button cell is as follows: mix each of the positive electrode materials prepared from Examples 1-22 and Comparative Examples 1-2 with conductive carbon black (SP) and PVDF in a weight ratio of 80:10:10, disperse them in a solvent to obtain positive electrode slurry, coat the slurry on an aluminum foil current collector, and roll to prepare a positive electrode piece; then, punch the positive electrode piece with a die to obtain small round pieces with a diameter of 12 mm, conduct drying treatment and weighing treatment, then assemble the button cell using a button cell shell of type 2025, a Li metal round piece as negative electrode, and conventional high voltage lithium cobaltate electrolyte in a glove box under Ar protective atmosphere. After the button cell is made, it is left to stand for 4 hours in a normal environment, and then a first charge and discharge capacity test is carried out, with the test conditions as below: charging to 4.5V at 0.1C, charging to 0.025C at constant voltage, and cutting off to stand for 3 minutes, then discharging to 3.0V at 0.1C. Charge and discharge curves of the positive electrode material provided in Example 1 are shown in FIG. 2. The first charge gram capacity, and the first discharge gram capacity C0 mAh/g are recorded, and at the same time, a discharge gram capacity within the range from beginning of discharge to the cut-off voltage 4.4V is defined as C1 mAh/g, the gram capacity discharged within the discharge voltage range of 3.8V-3.7V in discharge capacity is defined as C2 mAh/g, and first time efficiency, C1/C0 and C2/C0 are calculated. The results are shown in Table 2.

The positive electrode materials provided according to Examples 1-22 and Comparative Examples 1-4 are mixed, after a certain amount of amplification, with conductive carbon black and PVDF in a weight ratio of 96:2:2, dispersed in a solvent to prepare a positive electrode active layer slurry, the slurry is coated on a surface of a positive electrode aluminum current collector to obtain a positive electrode piece, which is subsequently assembled with a negative electrode piece, a separator and electrolyte to obtain a lithium ion battery. A specific preparation method is as follows:
artificial graphite (with charging cut-off voltage being 4.5V), styrene butadiene rubber (SBR), sodium carboxymethylcellulose and conductive carbon black are mixed in a weight ratio of 94:3:2:1, dispersed in water and mixed by revolution-rotation mixing equipment, to obtain a negative electrode active layer slurry, which is coated on a negative electrode copper current collector to obtain the negative electrode piece.

The electrolyte includes an organic solvent and an additive, and the organic solvent includes ethylene carbonate (EC), diethyl carbonate (DEC), propylene carbonate (PC) and fluoroethylene carbonate (FEC), and the additive has the following structure: 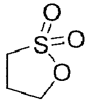 then cycle performance of the lithium ion battery is tested. The cycle performance test process is as follows: at 25°C, charge to 4.50V at a constant current with a charge rate of 1C, then charge to 4.50V at a constant voltage with a charge rate of 0.05C, and then discharge to 3.0V at a discharge rate of 1C. This charge and discharge cycle are repeated for 500 times. A discharge capacity at the first cycle and a discharge capacity at the 500^{th} cycle are determined, to calculate capacity retention rate after cycles as follows: capacity retention rate after cycles = (discharge capacity at the 500^{th} cycle) / (discharge capacity at the first cycle) * 100%. The results are shown in Table 2.

**Table 2 Test results of gram capacity and battery performance of the positive electrode materials provided in Examples 1-22 and Comparative Examples 1-4**

| | First charge gram capacity for button cell (mAh/g) | First discharge gram capacity for button cell (mAh/g) | First efficiency for button cell | C1/C0 | C2/C0 | Capacity retention rate after 500 cycles for full battery |
|---|---|---|---|---|---|---|
| Example 1 | 210.5 | 201.2 | 95.60% | 11.30% | 29.60% | 85.30% |
| Example 2 | 209.8 | 200.7 | 95.70% | 10.90% | 29.90% | 85.83% |
| Example 3 | 208.3 | 200.3 | 96.20% | 10.30% | 30.20% | 84.97% |
| Example 4 | 209.2 | 201.4 | 96.30% | 11.10% | 29.70% | 86.56% |
| Example 5 | 211.3 | 202.5 | 95.80% | 11.90% | 29.60% | 86.02% |
| Example 6 | 209.7 | 202 | 96.30% | 12.20% | 30.10% | 84.83% |
| Example 7 | 210.8 | 199.8 | 94.80% | 12.60% | 31.50% | 86.39% |
| Example 8 | 208.9 | 201.3 | 96.40% | 11.50% | 28.90% | 83.98% |
| Example 9 | 209.7 | 201 | 95.90% | 11.30% | 29.80% | 85.76% |
| Example 10 | 211 | 200.8 | 95.20% | 12.10% | 30.05% | 86.13% |
| Example 11 | 212.4 | 202.3 | 95.20% | 10.85% | 31.06% | 85.93% |
| Example 12 | 210.6 | 201.4 | 95.60% | 12.30% | 29.45% | 86.77% |
| Example 13 | 211.2 | 199.5 | 94.50% | 11.70% | 30.64% | 87.81% |
| Example 14 | 208.5 | 198.4 | 95.20% | 12.34% | 31.47% | 88.34% |
| Example 15 | 208.1 | 197.4 | 94.90% | 12.98% | 32.05% | 88.76% |
| Example 16 | 210.9 | 200 | 94.80% | 11.87% | 29.86% | 86.98% |
| Example 17 | 211.3 | 198.7 | 94.00% | 12.48% | 30.96% | 87.44% |
| Example 18 | 208.6 | 198 | 94.90% | 13.13% | 31.07% | 88.65% |
| Example 19 | 210.6 | 201.4 | 95.60% | 11.59% | 29.64% | 84.86% |
| Example 20 | 209.5 | 199.9 | 95.40% | 11.78% | 29.63% | 86.76% |
| Example 21 | 208.9 | 199.1 | 95.30% | 12.18% | 30.32% | 87.95% |
| Example 22 | 207.8 | 198.4 | 95.50% | 13.04% | 31.05% | 88.35% |
| Comparative Example 1 | 205.2 | 195.4 | 95.20% | 6.54% | 0.46% | 56.32% |
| Comparative Example 2 | 199 | 187.8 | 94.40% | 5.87% | 0.52% | 78.42% |
| Comparative Example 3 | 206.5 | 189.6 | 91.8% | 9.08% | 24.89% | 79.45% |
| Comparative Example 4 | 207.3 | 190.4 | 91.8% | 8.17% | 24.68% | 78.87% |

It can be found from Table 2 that the positive electrode materials provided in Examples 1-22 of the present invention are helpful to improve the capacity and cycle performance of a lithium ion battery compared with Comparative Examples 1-4, and the capacity retention rate after 500 cycles is at least 80%. It can be known according to Examples 13-22 and Comparative Examples 3-4, that the cycle performance of a lithium ion battery is also improved with the increase of the peak intensity ratio *m.* To sum up, the positive electrode materials provided by the present invention can enable the lithium ion battery to achieve high discharge gram capacity and excellent cycle performance at high voltage, and meet people's demand for thin lithium-ion batteries.

Finally, it should be noted that the above examples are only used to illustrate the technical solution of the present invention, not to limit it; although the present invention has been described in detail with reference to the above-mentioned examples, those skilled in the art should understand that they can still modify the technical solutions recited in the above-mentioned examples, or replace equivalently some or all of the technical features therein; however, these modifications or replacements do not make the essence of the corresponding technical solutions depart from the scope of the technical solutions of the examples of the present invention.

## Claims

1. A positive electrode material, wherein the positive electrode material is Liₙ₋ₓNaₓCo_{1-y}Me_{y}O₂, 0.7 ≤ n ≤ 1, 0 < x ≤ 0.15, 0 ≤ y ≤ 0.15, and Me is selected from one or more of Al, Mg, Ti, Zr, Ni, Mn, Y, La, Sr, W, Sc, Ce, P, Nb, V, Ta, and Te;
a X-ray diffraction pattern of the positive electrode material has a peak 002 corresponding to a crystal plane 002, a peak 004 corresponding to a crystal plane 004, a peak 101 corresponding to a crystal plane 101, a peak 102 corresponding to a crystal plane 102, and a peak 103 corresponding to a crystal plane 103;
a peak intensity ratio of the peak 101 to the peak 004 is *m,* wherein *m*≥1.5.

2. The positive electrode material according to claim 1, wherein a diffraction angle 2θ corresponding to the peak 002 is equal to 18.6°±0.5°, a diffraction angle 2θ corresponding to the peak 102 is equal to 41.7°±0.5°, a diffraction angle 2θ corresponding to the peak 103 is equal to 47.1°±0.5°.

3. The positive electrode material according to claim 1 or 2, wherein a particle size of the positive electrode material is 6-18 µm.

4. The positive electrode material according to claim 1 or 2, wherein a gram capacity of the positive electrode material at a voltage of 3.0-4.5V is ≥ 196mAh/g, and a discharge gram capacity at a rate of 0.1C is C0 mAh/g, a discharge gram capacity from beginning of discharge to 4.4V is C1 mAh/g, and a discharge gram capacity within 3.8V-3.7V is C2 mAh/g, wherein C1/C0≥9%, and C2/C0≥25%.

5. A battery, wherein the battery comprises a positive electrode piece, the positive electrode piece comprises a positive electrode current collector and a positive electrode active layer provided on at least one surface of the positive electrode current collector, and the positive electrode active layer comprises the positive electrode material according to any one of claims 1-4.

6. The battery according to claim 5, wherein a mass of the positive electrode material is 70-99% of a total mass of the positive electrode active layer.

7. The battery according to claim 5, wherein the positive electrode active layer comprises a binder and a conductive agent.

8. The battery according to claim 6, wherein the positive electrode active layer comprises a binder and a conductive agent.

9. The battery according to claim 7 or 8, wherein the binder is selected from one or more of polyvinylidene fluoride, polytetrafluoroethylene and lithium polyacrylate; and/or, the conductive agent is selected from one or more of conductive carbon black, acetylene black, Ketjen black, conductive graphite, conductive carbon fiber, carbon nanotube, single-wall carbon nanotube, multi-wall carbon nanotube, and carbon fiber.

10. The battery according to claim 7, wherein a mass of the binder is 0.5-15% of a total mass of the positive electrode active layer, and a mass of the conductive agent is 0.5-15% of a total mass of the positive electrode active layer.

11. The battery according to claim 8, wherein a mass of the binder is 0.5-15% of the total mass of the positive electrode active layer, and a mass of the conductive agent is 0.5-15% of the total mass of the positive electrode active layer.

12. An electronic device, wherein the electronic device comprises the battery according to any one of claims 5-11.
